(19)

Europäisches
Patentamt
European
Patent Office
Office européen
des brevets

(11)     **EP 1 439 151 B1**

(12)                **EUROPEAN PATENT SPECIFICATION**

(45) Date of publication and mention
of the grant of the patent:
**05.11.2008   Bulletin 2008/45**

(51) Int Cl.:
*C03C 3/091* (2006.01)      *H01J 29/86* (2006.01)

(21) Application number: **03000406.3**

(22) Date of filing: **10.01.2003**

(54) **Lead free glass and a glass tube made therefrom**

Bleifreies Glas und ein daraus hergestelltes Glasrohr

Verre sans plomb et une tube en verre fabriquée de ce verre

(84) Designated Contracting States:
**AT BE BG CH CY CZ DE DK EE ES FI FR GB GR
HU IE IT LI LU MC NL PT SE SI SK TR**

(43) Date of publication of application:
**21.07.2004   Bulletin 2004/30**

(73) Proprietor: **L. Electric Glass Co., Ltd.
Ampur Muang,
Samutsakorn 74000 (TH)**

(72) Inventor: **Ovuthitham, Somchai
Ampur Muang, Samutsakorn 74000 (TH)**

(74) Representative: **Hoffmeister, Helmut
Patentanwalt
Goldstrasse 36
48147 Münster (DE)**

(56) References cited:
**EP-A- 0 822 169**

- **DATABASE WPI Section Ch, Week 199247
Derwent Publications Ltd., London, GB; Class
L01, AN 1992-388488 XP002242949 & SU 1 671
625 A (GLASS RES INST), 23 August 1991
(1991-08-23)**
- **DATABASE WPI Section Ch, Week 197845
Derwent Publications Ltd., London, GB; Class
L01, AN 1978-81140A XP002242950 & JP 53
113813 A (ASAHI GLASS CO LTD), 4 October 1978
(1978-10-04)**
- **DATABASE WPI Section Ch, Week 200012
Derwent Publications Ltd., London, GB; Class
L01, AN 1992-086081 XP002242947 & JP 03
007653 B (NIPPON ELECTRIC GLASS CO), 7
February 2000 (2000-02-07)**
- **DATABASE WPI Section Ch, Week 199109
Derwent Publications Ltd., London, GB; Class
L01, AN 1991-062630 XP002242951 & JP 03
012337 A (NIPPON ELECTRIC GLASS CO), 21
January 1991 (1991-01-21)**

## Description

### Field of the Invention

This invention relates to an essentially lead free glass. The invention also relates to a glass tube made from the essentially lead free glass. The lead free glass has properties making it particularly suitable for use in tubes of electric lamps. Therefore the glass may be used in the manufacture of light bulbs.

### Background of the Invention

Nowadays glass tubes used in the manufacture of electric lamps are usually made from either a soda-lime glass or a lead glass. The lead glass contains lead oxide. Both lead oxide dust and lead vapour from melting lead oxide can cause dangerous air pollution harmful to the environment and to human beings.

Lead oxide acts as a fluxing agent and gives lead glass a lower softening point than soda-lime glass. It is desirable for glass that is used in making tubes for electric lamps to have this lower softening point but without containing lead oxide.

For making such a glass suitable for use in electric lamp production, we have substituted lithium carbonate for the lead oxide. Lithium carbonate is also a fluxing agent. Because of this it allows an increase in the melting rate of the glass by lowering its viscosity. It also leads to a lower seed (bubble) count, a lower thermal expansion coefficient and a higher chemical durability of the glass as well.

We have also found that when cerium oxide and titanium dioxide are mixed with the essentially lead free glass, a glass may be made that is capable of absorbing substantially all ultraviolet (UV) radiation having a wavelength shorter than 320 nm.

It has been known that cerium oxide may be used as a decolouriser and a refining agent. It also acts as a flux in glass making and helps clear gas by reducing seeding and bubble formation in molten glass. In addition, the use of cerium oxide has also been reported to increase the life expectancy of the melting electrodes used in electric furnaces.

Cerium oxide may have its performance complemented by the addition of sodium nitrate, which causes a chemical reaction with the cerium oxide.

The presence of cerium oxide, with or without the addition of sodium nitrate, does not increase the absorption of the visible spectrum of light and light transmittance at wavelengths greater than 320 nm. is particularly satisfactory for the manufacturer of electric lamps.

### Summary of the Invention

An object of at least one preferred embodiment of the present invention is the provision of an essentially lead free glass suitable for the manufacture of tubes for electric lamps.

Another object of at least a preferred embodiment of the invention is such an essentially lead free glass tube. This is achieved by replacing the potentially harmful lead oxide present in lead glass.

Another object of at least a preferred embodiment of the invention is to provide an essentially lead free glass that absorbs substantially all UV radiation having a wavelength shorter than 320 nm. while, preferably, increasing the efficiency of transmission of visible light. These features are also desirable in glass tubes used in the manufacture of electric lamps.

In a first aspect, the present invention broadly consists in an essentially lead free glass comprising:

| Compound | Percentage |
|---|---|
| $Li_2O$ | 1.0 - 3.0 |
| $CeO_2$ | 0.1 - 0.3 |
| $TiO_2$ | 0.05 - 0.15 |

The lead free glass will typically comprise 65.0-75.0% $SiO_2$. It may contain one or more, and preferably contains all of the following: 2.0-4.0% $Al_2O_3$, 1.0-3.0% $B_2O_3$, 3.0-5.0 % BaO, a total of 6.0-9.0% MgO and/or CaO, 6.0-9.0% $Na_2O$, 3.0-5.0% $K_2O$, 1.0-3.0% $Li_2O$, 0.1-0.3% $CeO_2$, optionally about 0.01% $Fe_2O_3$ and 0.05-0.15% $TiO_2$.

In a second aspect, the present invention broadly consists in a glass tube made from an essentially lead free glass as defined above.

In a third aspect, the present invention broadly consists in an electric lamp having its tube (which term includes "bulb") made from the essentially lead free glass as defined above.

In the specification, unless otherwise stated, percentages are by weight.

### Brief description of the Drawings

**Figure 1** is a graph showing light transmittance at various wave lengths for an essentially lead free glass containing 0.01 % titanium dioxide ($TiO_2$).

**Figure 2** is a graph showing light transmittance at various wave lengths for an essentially lead free glass containing 0.10% titanium dioxide ($TiO_2$).

**Figure 3** is a graph of flexibility or softening point showing the elongation rate per minute at various temperatures.

## Description of the Invention

The present invention has resulted from a case study made by the Inventor with the intention of finding a substitute substance for the lead oxide contained in lead glass while, in general, retaining as much as possible the desirable properties of lead glass. At the same time, the Inventor desired to improve, if possible, the absorbance of the glass to UV radiation that is harmful to the eyes of human beings.

The Inventor worked in the production of glass tubing made from soda-lime and lead glass. The Inventor discovered that the proportion of soda ash and potassium carbonate, which respectively form sodium oxide ($Na_2O$) and potassium oxide ($K_2O$) in the glass, was the main factor affecting the coefficient of expansion or alpha ($\alpha$) value of the glass. Therefore, for the essentially lead free glass of the present invention it was desired to have the alpha value close to that of lead glass. For a glass having a sodium oxide ($Na_2O$) content of 7.5-9.5% and a potassium oxide ($K_2O$) content of 3.5-5.0%, an alpha value range of about $(93.0-95.0) \times 10^{-7}/ ^{\circ}C$. was obtained. The extent of the thermal expansion of glass is related to its temperature durability. This is relevant for the use of glass for the tubes of electric lamps.

It was also necessary to consider the softening point of the glass as well because this is one of the most important properties of glass. For lead glass containing litharge to provide the lead oxide (PbO) content, the softening point of the glass is lower than that of soda-lime glass. The Inventor found that the softening point of soda-lime glass was generally in the range 690-700°C., whereas the softening point of lead glass was generally in the range of 610-620°C.

Therefore, instead of the litharge we used a lithium oxide forming substance. In particular, we used 1.5% of lithium carbonate ($Li_2CO_3$), which formed lithium oxide ($Li_2O$) in the mix with the other raw materials for making a glass having a softening point higher than that of lead glass but not greater than that of soda-lime glass.

In addition, we mixed 0.20-0.25% of cerium oxide ($CeO_2$) and titanium dioxide ($TiO_2$) into the glass mixture to produce a glass having an improved light transmittance; by that meaning a better absorbance at wave lengths shorter than 320 nm. with at least normal and preferably improved transmittance of visible light. Normally, titanium dioxide ($TiO_2$) was an impurity in the mixture and, depending on the degree it already existed in the mixture as an impurity, only 0-0.01 % was required to be added to the mixture.

The following describe some examples of the invention. They are given only by way of demonstrating the working of the invention and are not intended to limit the scope of the invention as broadly claimed.

### Example 1

The raw material mixture for the essentially lead free glass was as follows:

| Compound | Percentage |
|---|---|
| $SiO_2$ | 68.67 |
| $Al_2O_3$ | 3.00 |
| $B_2O_3$ | 2.00 |
| BaO | 4.00 |
| MgO } CaO } | 8.00 |
| $Na_2O_3$ | 7.60 |
| $K_2O$ | 5.00 |
| $Li_2O$ | 1.50 |
| $CeO_2$ | 0.20 |
| $Fe_2O_3$ | 0.02 |
| $TiO_2$ | 0.01 |

To obtain these percentages of the compounds, we calculated the raw materials used in the melting glass method to be as follows:

| | |
|---|---|
| Sand | 68.85 |
| Soda ash dense | 10.80 |
| Alumina | 2.97 |
| Potassium Carbonate | 7.36 |
| Dolomite | 15.18 |
| Barium Carbonate | 5.24 |
| Lithium Carbonate | 3.73 |
| Sodium Nitrate | 1.00 |
| Cerium Oxide | 0.20 |
| Borax Pentahydrate | 4.12 |

After ensuring that the glass was essentially lead free, we checked its physical properties and found that it had an alpha ($\alpha$) value of $92.0 \times 10^{-7} / ^{\circ}C$ and a softening point of 690°C. For this example, the alpha value was lower than that for lead glass but the softening point was higher than that for lead glass but close to that for soda-lime glass.

Therefore, we adjusted the chemical balance to reduce the softening point by changing the amount of lithium oxide from 1.50% to 2.70% in the following example.

### Example 2

| Compound | Percentage |
|---|---|
| $SiO_2$ | 68.78 |
| $Al_2O_3$ | 3.00 |
| $B_2O_3$ | 2.00 |
| BaO | 4.00 |
| MgO ⎫<br>CaO ⎭ | 7.80 |
| $Na_2O$ | 7.30 |
| $K_2O$ | 4.00 |
| $Li_2O$ | 2.70 |
| $CeO_2$ | 0.20 |
| $Fe_2O$ | 0.01 |
| $TiO_2$ | 0.01 |

To obtain these percentages of the chemical compounds, we calculated the proportions of the materials required before performing the melting glass method as follows:

| | |
|---|---|
| Sand | 69.00 |
| Soda ash dense | 10.31 |
| Alumina | 2.98 |
| Potassium Carbonate | 5.88 |
| Dolomite | 15.19 |
| Barium Carbonate | 5.24 |
| Lithium Carbonate | 6.73 |
| Sodium Nitrate | 1.00 |
| Cerium Oxide | 0.20 |
| Borax Pentahydrate | 4.12 |

After ensuring the glass was essentially lead free, we investigated its physical properties and found its alpha ($\alpha$) value to be $95.4 \times 10^{-7}$ / ˚C. and its softening point value to be 656˚C.

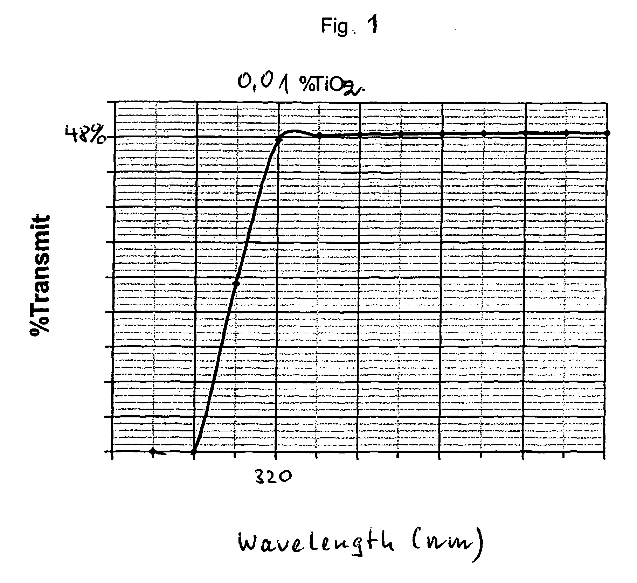

For the Example 2, the alpha value was higher and the softening point was lower than that of Example 1. We proceeded to investigate the transmittance properties of Example 2. The result found was that the percentage transmittance of UV radiation was substantially zero for wavelengths less than 320 nm. but rose for longer wavelengths. At the wavelength becoming visible to human eyes, the percentage transmittance increased to about 48.29% (Figure 1).

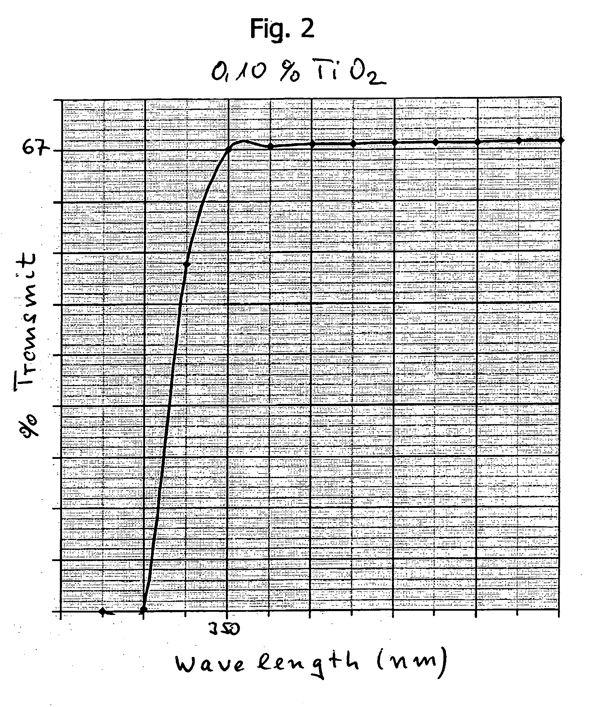

Therefore, to encourage the highest utility in the industrial lamp production industry, we added to the essentially lead free glass 0.10% of titanium dioxide ($TiO_2$). We found that this increased a percentage transmittance of the visible light at a wavelength of 350 nm., that transmittance being 67.64% (Figure 2).

From this, the Inventor concluded that for at least one preferred embodiment of the invention the most suitable chemical proportions to be used in the production of essentially lead free glass are as follows:

| Compound | Percentage |
|---|---|
| $SiO_2$ | 68.89 |
| $Al_2O_3$ | 3.00 |
| $B_2O_3$ | 2.00 |
| BaO | 4.00 |
| MgO ⎫<br>CaO ⎭ | 7.80 |
| $Na_2O$ | 7.80 |
| $K_2O$ | 4.00 |
| $Li_2O$ | 2.20 |
| $CeO_2$ | 0.20 |
| $Fe_2O_3$ | (0.01) |
| $TiO_2$ | 0.10 |

In the above table the percentage of $Fe_2O_3$ represented the level of the impurity contained in the raw materials. By removing essentially all $Fe_2O_3$ it was found to have no significant effect on any property of the essentially lead free glass.

The physical properties of this glass were investigated and it was found to have an alpha ($\alpha$) value of $(94.5 \pm 0.5) \times 10^{-7}$ / ˚C. and a softening point of $660 \pm 5$˚C.

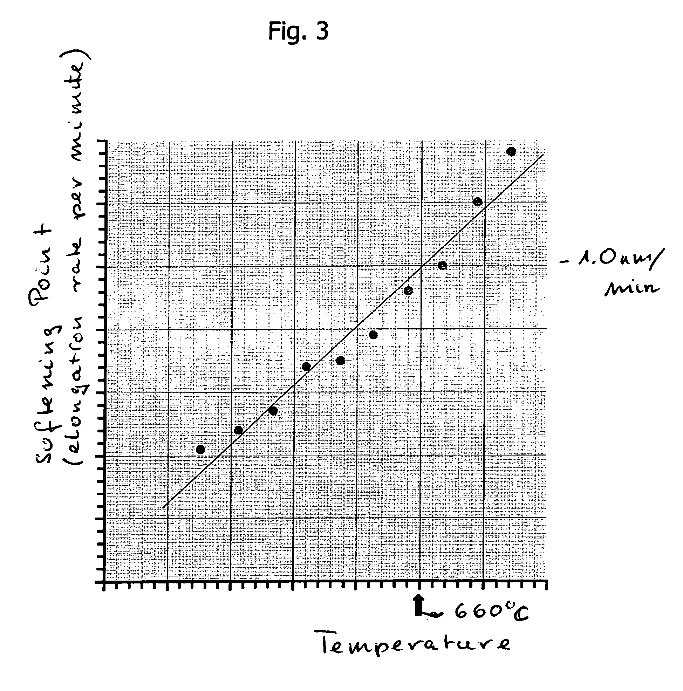

Figure 3 is a graph showing the elongation rate of glass per minute plotted against the temperature and enables the softening point value of the glass to be determined. For an elongation rate of 1.0 nm. / minute the softening point is shown to be 660˚C.

From an examination of other properties of the essentially lead free glass, we determined its density to be $2.54 \pm 0.01$ gm/cc. This density value is between the density values of soda-lime and lead glasses.

We have intentionally described the easiest empirical experiments in the above examples. As already stated, these examples are intended to be illustrative of the invention only and are not intended to limit the scope of the invention claimed.

**Claims**

1. A lead free glass, particularly suitable for use in electric lamps, comprising:

| Compound | Percentage |
|---|---|
| $Li_2O$ | 1.0 - 3.0 |
| $CeO_2$ | 0.1 - 0.3 |
| $TiO_2$ | 0.05 - 0.15 |

2. A lead free glass particularly suitable for use in electric lamps, comprising:

| Compound | Percentage |
|---|---|
| $SiO_2$ | 65.0 - 75.0 |
| $Al_2O_3$ | 2.0 - 4.0 |
| $B_2O_3$ | 1.0 - 3.0 |
| $BaO$ | 3.0 - 5.0 |
| MgO⎫ | 6.0 - 9.0 |
| CaO⎭ | |
| $Na_2O$ | 6.0 - 9.0 |
| $K_2O$ | 3.0 - 5.0 |
| $Li_2O$ | 1.0 - 3.0 |
| $CeO_2$ | 0.1 - 0.3 |
| $Fe_2O_3$ | (0.01) optional |
| $TiO_2$ | 0.05 - 0.15 |

3. A lead free glass according to claim 1 wherein the glass has a softening point between the softening points of soda-lime glass and lead glass.

4. A lead free glass according to claim 1 wherein the glass has a UV transmittance of essentially zero for wavelengths shorter than 320 nm.

5. A lead free glass according to claim 1 wherein the glass has an improved transmittance of light at a wavelength of 350 nm. relative to a glass essentially free of cerium oxide and titanium dioxide.

6. A tube made from the lead free glass as claimed in any one of the preceding claims 1-5.

7. An electric lamp having a tube made from the essentially lead free glass as claimed in any one of claims 1-5.

8. A lead free glass according to claim 2 wherein the glass has a softening point between the softening points of soda-lime glass and lead glass.

9. A lead free glass according to claim 2 wherein the glass has a UV transmittance of essentially zero for wavelengths shorter than 320 nm.

10. A lead free glass according to claim 2 wherein the glass has an improved transmittance of light at a wavelength of 350 nm. relative to a glass essentially free of cerium oxide and titanium dioxide.

11. A tube made from the lead free glass as claimed in any one of claims 2 and 8-10.

12. An electric lamp having a tube made from the lead free glass as claimed in any one of claims 2 and 8-10.


**Patentansprüche**

1. Bleifreies Glas, insbesondere verwendbar in elektrischen Leuchtkörpern, umfassend:

| Verbindung | Gehalt in Prozent |
|---|---|
| $Li_2O$ | 1.0 - 3.0 |
| $CeO_2$ | 0.1 - 0.3 |
| $TiO_2$ | 0.05 - 0.15 |

2. Bleifreies Glas, insbesondere verwendbar in elektrischen Leuchtkörpern, umfassend:

| Verbindung | Gehalt in Prozent |
|---|---|
| $SiO_2$ | 65.0 - 75.0 |
| $Al_2O_3$ | 2.0 - 4.0 |
| $B_2O_3$ | 1.0 - 3.0 |
| $BaO$ | 3.0 - 5.0 |
| MgO) | 6.0 - 9.0 |
| CaO) | |
| $Na_2O$ | 6.0 - 9.0 |
| $K_2O$ | 3.0 - 5.0 |
| $Li_2O$ | 1.0 - .3.0 |
| $CeO_2$ | 0.1 - 0.3 |
| $Fe_2O_3$ | (0.01) optional |
| $TiO_2$ | 0.05 - 0.15 |

3. Bleifreies Glas nach Anspruch 1, **dadurch gekennzeichnet, dass** das Glas einen Erweichungspunkt zwischen dem Erweichungspunkt von Kalknatronglas und Bleiglas hat.

4. Bleifreies Glas nach Anspruch 1, **dadurch gekennzeichnet, dass** das Glas eine UV-Durchlässigkeit hat von im Wesentlichen Null für Wellenlängen kürzer als 320 nm.

5. Bleifreies Glas nach Anspruch 1, **dadurch gekennzeichnet, dass** das Glas eine besserte Durchlässigkeit von Licht bei einer Wellenlänge von 350 nm hat relativ zu einem Glas, das im Wesentlichen frei ist von Ceroxid und Titandioxid.

**6.** Röhre, hergestellt aus dem bleifreien Glas nach einem der vorhergehenden Ansprüche 1-5.

**7.** Elektrischer Leuchtkörper umfassend eine Röhre, die im Wesentlichen aus einem bleifreien Glas gemäß einem der Ansprüche 1-5 hergestellt ist.

**8.** Bleifreies Glas nach Anspruch 2, **dadurch gekennzeichnet, dass** das Glas einen Erweichungspunkt zwischen dem Erweichungspunkt von Kalknatronglas und Bleiglas hat.

**9.** Bleifreies Glas nach Anspruch 2, **dadurch gekennzeichnet, dass** das Glas eine UV-Durchlässigkeit hat von im Wesentlichen Null für Wellenlängen kürzer als 320 nm.

**10.** Bleifreies Glas nach Anspruch 2, **dadurch gekennzeichnet, dass** das Glas eine verbesserte Durchlässigkeit von Licht bei einer Wellenlänge von 350 nm hat relativ zu einem Glas, das im Wesentlichen frei von Ceroxid und Titandioxid ist.

**11.** Röhre hergestellt aus dem bleifreien Glas nach einem der Ansprüche 2 und 8-10.

**12.** Elektrischer Leuchtkörper umfassend eine Röhre, die aus dem bleifreien Glas nach einem der Ansprüche 2 und 8-10 hergestellt ist.

**Revendications**

**1.** Verre sans plomb particulièrement adapté à une utilisation dans les lampes électriques, comprenant:

| Composé | Pourcentage |
|---|---|
| $Li_2O$ | 1,0 à 3,0 |
| $CeO_2$ | 0,1 à 0,3 |
| $TiO_2$ | 0,05 à 0,15. |

**2.** Verre sans plomb particulièrement adapté à une utilisation pour les lampes électriques, comprenant:

| Composé | Pourcentage |
|---|---|
| $SiO_2$ | 65,0 à 75,0 |
| $Al_2O_3$ | 2,0 à 4,0 |
| $B_2O_3$ | 1,0 à 3,0 |
| BaO | 3,0 à 5,0 |

(suite)

| Composé | Pourcentage |
|---|---|
| $MgO$ $CaO$ | 6,0 à 9,0 |
| $Na_2O$ | 6,0 à 9,0 |
| $K_2O$ | 3,0 à 5,0 |
| $Li_2O$ | 1,0 à 3,0 |
| $CeO_2$ | 0,1 à 0,3 |
| $Fe_2O_3$ | (0,01 facultatif) |
| $TiO_2$ | 0,05 à 0,15. |

**3.** Verre sans plomb selon la revendication 1 où le point de ramollissement du verre est compris entre les points de ramollissement du verre calcaire natron et du verre plombeux.

**4.** Verre sans plomb selon la revendication 1 où le facteur de transmission du verre aux UV est essentiellement nul pour les longueurs d'ondes inférieures à 320 nm.

**5.** Verre sans plomb selon la revendication 1, où le facteur de transmission du verre à la lumière à 350 nm est amélioré par rapport à celui d'un verre essentiellement exempt d'oxyde de cérium et de dioxyde de titane.

**6.** Tube fabriqué à partir du verre sans plomb selon l'une quelconque des revendications précédentes.

**7.** Lampe électrique comprenant un tube fabriqué à partir de verre essentiellement sans plomb selon l'une quelconque des revendications 1 à 5.

**8.** Verre sans plomb selon la revendication 2 où le point de ramollissement du verre est compris entre les points de ramollissement du verre calcaire natron et du verre plombeux.

**9.** Verre sans plomb selon la revendication 2, où le facteur de transmission du verre aux UV est essentiellement nul pour les longueurs d'ondes inférieures à 320 nm.

**10.** Verre sans plomb selon la revendication 2, où le facteur de transmission du verre à la lumière à 350 nm est amélioré par rapport à celui d'un verre essentiellement exempt d'oxyde de cérium et de dioxyde de titane.

**11.** Tube fabriqué à partir du verre sans plomb selon l'une quelconque des revendications 2 et 8 à 10.

**12.** Lampe électrique comprenant un tube fabriqué à partir du verre sans plomb selon l'une quelconque des revendications 2 et 8 à 10.

Fig. 1

0,01 %TiO₂.

Fig. 2

0,10 % Ti O₂

## Fig. 3